# EUROPÄISCHE PATENTANMELDUNG

(11) **EP 1 746 330 A2**
(43) Veröffentlichungstag der Anmeldung: **24.01.2007**
(21) Anmeldenummer: 06115241.9
(22) Anmeldetag: 09.06.2006
(51) Int. Cl.: F16L 37/14

(54) **Aufnahmeteil einer Fluid-Steckverbindung**

(30) Priorität: 19.07.2005 DE 102005033665
(71) Anmelder: Elsässer, Helmut, 68775 Ketsch (DE)
(72) Erfinder: Elsässer, Helmut, 68775 Ketsch (DE)
(74) Vertreter: Preissner, Nicolaus

(57) **Zusammenfassung**

Bei einem Aufnahmeteil für einen Stecker (30), insbesondere einen Ladeluft-Stecker eines Verbrennungsmotors, weist der Stecker (30) einen Vorderbereich (31), einen konischen Übergangsbereich (32) und einen Endbereich (33) auf, wobei der Durchmesser vom Vorderbereich (31) in Richtung zum Endbereich (33) ansteigt. Das Aufnahmeteil (10) weist ein hohlzylinderförmiges Gehäuse (13) mit einer inneren Mantelfläche (11) auf, die in einen Vorderabschnitt (11a), einen konischen Übergangsabschnitt (11b) und einen Endabschnitt (11c) unterteilt ist. Der Öffnungsquerschnitt steigt vom Vorderabschnitt (11a) in Richtung zum Endabschnitt (11c) an. An dem Gehäuse (13) ist ein Befestigungselement angeordnet, das den Stecker (30) im eingeführten Zustand lösbar festlegt. Ferner ist an dem Gehäuse (13) eine Dichtung (20) angeordnet ist, die mit dem Stecker (30) im eingeführten Zustand zusammenwirkt. Erfindungsgemäß ist der Öffnungsquerschnitt des Gehäuses (13) derart dimensioniert, dass der Vorderbereich (31) des Steckers (30) im eingeführten Zustand vollständig im Vorderabschnitt (11a) aufgenommen ist und an diesem anliegt. Zudem ist die Dichtung (20) im Bereich des konischen Übergangsabschnittes (11b) des Gehäuses (13) angeordnet und wirkt mit dem konischen Übergangsbereich (32) des Steckers (30) im eingeführten Zustand zusammen.

## Beschreibung

Die Erfindung betrifft ein Aufnahmeteil für einen Stecker, insbesondere einen Ladeluft-Stecker eines Verbrennungsmotors. Der Stecker weist einen Vorderbereich, einen konischen Übergangsbereich und einen Endbereich auf, wobei der Durchmesser vom Vorderbereich in Richtung zum Endbereich ansteigt. Das Aufnahmeteil weist ein hohlzylinderförmiges Gehäuse mit einer inneren Mantelfläche auf, die in einen Vorderabschnitt, einen konischen Übergangsabschnitt und einen Endabschnitt unterteilt ist. Dabei steigt der Öffnungsquerschnitt vom Vorderabschnitt in Richtung zum Endabschnitt an. An dem Gehäuse ist ein Befestigungselement angeordnet, das den Stecker im eingeführten Zustand lösbar festlegt. Zudem ist an dem Gehäuse eine Dichtung im Bereich des konischen Übergangsabschnittes des Gehäuses angeordnet und wirkt mit dem konischen Übergangsbereich des Steckers im eingefügten Zustand zusammen.

Ein derartiges Aufnahmeteil kommt bei Steckkupplungen zur Verbindung von Rohren und Schläuchen zum Einsatz. Es dient auch zum Einführen eines Rohres oder Schlauches in ein Gehäuse, wobei das Aufnahmeteil mit dem Gehäuse in Verbindung steht. Die allgemein aus einem Aufnahmeteil und einem Stecker bestehenden Steckkupplungen werden häufig auch als Steckverbindungen bezeichnet. Zur Verbindung zweier Schläuche weisen das Aufnahmeteil und der Stecker an den voneinander abgewandten Enden jeweils einen Anschlussbereich zur Festlegung eines Schlauches auf. Um einen zuverlässigen Halt des Steckers in dem Aufnahmeteil zu gewährleisten, wird die zusammengesteckte Steckkupplung mit einem Befestigungsmittel, beispielsweise in Form eines Sicherungsbügels, fixiert. Zusätzlich kann eine Verdrehsicherung vorgesehen werden.

Eine derartige Steckverbindung zum Verbinden von Fluidleitungssystemen ist beispielsweise in der DE 100 33 675 A1 beschrieben. Dabei umfasst die Steckverbindung eine Kupplung und einen in die Kupplung einführbaren Stecker. Der Stecker weist eine äußere Mantelfläche mit einem zylindrischen Vorderbereich und einem konischen Erweiterungsbereich auf. Die Kupplung wird durch ein hülsenförmiges Gehäuse mit einem Schlauchstutzen gebildet. Die innere Mantelfläche der Kupplung umfasst einen ersten zylindrischen Abschnitt im Bereich des Schlauchstutzens, einen zweiten zylindrischen Abschnitt zur Aufnahme des Vorderbereiches des Steckers, einen konischen Übergangsabschnitt und einen zylindrischen Endabschnitt. Im Bereich des konischen Übergangsabschnittes der Kupplung liegt in einer Ringnut ein elastisches Abstützelement, an dem sich der konische Erweiterungsbereich des Steckers abstützt. Das Abstützelement kann gleichzeitig als Dichtung wirken. Die eigentliche Dichtung ist im Bereich des zweiten zylindrischen Abschnittes in einer Nut angeordnet und wirkt im montierten Zustand der Steckverbindung mit dem zylindrischen Vorderbereich des Steckers zusammen. Zur Festlegung der Steckverbindung ist ein Federelement vorgesehen, das in einen Einschnitt in dem Endbereich der Kupplung einliegt.

Des Weiteren offenbart die DE 199 18 174 A1 eine Schnellkupplung mit einem Steckteil und einem Hülsenteil zur Aufnahme des Steckteils. Die äußere Mantelfläche des Steckteils umfasst einen zylindrischen Vorderbereich, einen konischen Übergangsbereich und einen zylindrischen Endbereich. Das Hülsenteil weist eine innere Mantelfläche mit einem ersten zylindrischen Abschnitt, einem zweiten zylindrischen Abschnitt zur Aufnahme des Vorderbereiches des Steckers, einem konischen Übergangsabschnitt und einem zylindrischen Endabschnitt auf. Im Bereich des konischen Übergangsabschnittes des Hülsenteils ist ein Dichtelement angeordnet, das mit dem konischen Übergangsbereich des Steckteils zusammenwirkt. Zur Fixierung der Schnellkupplung stützt sich ein Halteelement an dem Steckteil und an dem Hülsenteil ab.

Ferner ist aus der DE 198 52 395 C2 eine Steckkupplung mit einem Kupplungsstecker und einer Kupplungsaufnahme, in die der Kupplungsstecker eingeführt wird, bekannt. Die äußere Mantelfläche des Kupplungssteckers ist in einen zylindrischen Vorderbereich, einen konischen Übergangsbereich und einen zylindrischen Endbereich unterteilt. Die Kupplungsaufnahme weist ein hülsenförmiges Gehäuse mit einer inneren Mantelfläche auf, die im Bereich des Anschlussstutzens einen zylindrischen Vorderabschnitt aufweist. Daran schließt ein weiterer zylindrischer Abschnitt an, in dem eine Dichtung in einer Ringnut angeordnet ist, die im eingeführten Zustand mit dem Vorderbereich des Kupplungssteckers zusammenwirkt. Weiterhin weist die innere Mantelfläche der Kupplungsaufnahme einen konischen Übergangsabschnitt und einen zylindrischen Endabschnitt auf. Zur Verriegelung von Kupplungsaufnahme und Kupplungsstecker ist im Endabschnitt der Kupplungsaufnahme ein Schlitz und im Endbereich des Kupplungssteckers eine Nut angebracht. Diese Ausgestaltung ermöglicht, dass eine Verriegelungsfeder durch den Schlitz in die Nut einbringbar ist.

Als nachteilig hat es sich bei derartigen Steckverbindungen erwiesen, dass sich, um einerseits einen sicheren Halt des Steckers in dem Aufnahmeteil zu gewährleisten und andererseits die Festlegung der jeweils anzuschließenden Schläuche zu ermöglichen, verhältnismäßig große Baulängen für das Aufnahmeteil und den Stecker ergeben. Insbesondere ergibt sich für das Aufnahmeteil infolge der zahlreichen Abschnitte der inneren Mantelfläche und den dazwischen liegenden Abstufungen zur Ausbildung der Einstecköffnung für den Stecker eine große Baulänge. Hinzu kommt, dass bei einer Anordnung des Dichtelementes in einem zylindrischen Abschnitt des Aufnahmeteils eine verhältnismäßig hohe Kraft erforderlich ist, um den Stecker in das Aufnahmeteil einzuführen.

Der Erfindung liegt die **Aufgabe** zugrunde, ein Aufnahmeteil für einen Stecker zu schaffen, das unter Gewährleistung einer ausreichenden Halterung des Steckers in dem Aufnahmeteil und einer leicht durchführbaren Montage eine gegenüber herkömmlichen Aufnahmeteilen kürzere Baulänge aufweist.

Zur **Lösung** dieser Aufgabe ist in Übereinstimmung mit Anspruch 1 erfindungsgemäß vorgesehen, dass der Öffnungsquerschnitt des Gehäuses derart dimensioniert ist, dass der Vorderbereich des Steckers im eingeführten Zustand vollständig im Vorderabschnitt aufgenommen ist und an diesem anliegt.

Das erfindungsgemäße Aufnahmeteil beruht auf der Erkenntnis, dass infolge der Ausgestaltung der inneren Mantelfläche des hohlzylinderförmigen Gehäuses eine vollständige Aufnahme des Vorderbereiches des Steckers in dem Vorderabschnitt des Aufnahmeteils möglich ist. Dabei liegt der Vorderbereich des Steckers über seine gesamte Länge an dem Vorderabschnitt der inneren Mantelfläche an. Gleichzeitig dient der Vorderabschnitt des Aufnahmeteils zur Festlegung eines Schlauches oder Ähnlichem. So wird zum einen eine kurze Baulänge des Aufnahmeteils erzielt, wodurch sich auch die Baulänge der gesamten Steckverbindung im montierten Zustand verkürzt. Zum anderen wird trotz der kurzen Baulänge ein sicherer Halt des Steckers in dem Aufnahmeteil gewährleistet, da durch die Ausgestaltung der inneren Mantelfläche des Aufnahmeteils in Wechselwirkung mit der darauf abgestimmten Ausbildung der äußeren Mantelfläche des Steckers eine enge Passung zwischen Aufnahmeteil und Stecker geschaffen wird. Dies folgt insbesondere aus der weitgehend komplementären Ausformung der einander zugeordneten Abschnitte beziehungsweise Bereiche der Mantelflächen. Dadurch wird ein Kippen des Steckers in dem Aufnahmeteil verhindert.

Das erfindungsgemäße Aufnahmeteil ermöglicht es weiterhin, dass verhältnismäßig geringe Fügekräfte aufzubringen sind, um den Stecker in das Aufnahmeteil einzustecken. Der Grund dafür besteht darin, dass die Dichtung im Bereich des konischen Übergangsabschnittes angeordnet ist. Dadurch wird verhindert, dass die Dichtung beim Einsteckvorgang von dem Stecker verformt werden muss, um den Stecker in seine endgültige Position (im Folgen-den auch als eingeführter Zustand bezeichnet) bringen zu können. Bei dem erfindungsgemäßen Aufnahmeteil wird die Dichtung keinen derartigen Verformungen ausgesetzt, um das Einführen des Steckers zu ermöglichen. Dies führt zu einer hohen Lebensdauer der Dichtung.

Vorteilhafte Ausgestaltungen des erfindungsgemäßen Aufnahmeteils sind in den Ansprüchen 2 bis 12 beschrieben.

Eine bevorzugte Ausführungsform besteht darin, dass die Dichtung an den konischen Übergangsabschnitt der inneren Mantelfläche angespritzt ist. Aufgrund der Anbringung mittels Anspritzen kann eine einfache Herstellung und eine variable Formgebung der Dichtung erreicht werden. So müssen die Dichtungen für unterschiedlich große Aufnahmeteile nicht separat in verschiedenen Größen vorgefertigt werden. Dies ermöglicht eine kostengünstige Herstellung des Aufnahmeteils.

Um den praxisgerechten Einbau der Dichtung zu verbessern, weist der konische Übergangsabschnitt eine eingeformte Nut auf, in welche die Dichtung eingespritzt ist. Infolge der Anordnung der Dichtung in der Nut, kann ein im eingeführten Zustand eventuell vorhandener Freiraum zwischen dem Übergangsbereich des Steckers und dem Übergangsabschnitt des Aufnahmeteils minimiert werden. Beispielsweise kann die Dichtung so in der Nut angeordnet sein, dass der Übergangsbereich und der Übergangsabschnitt zumindest teilweise in Berührung kommen. So kann unter Gewährleistung der Dichtfunktion eine enge Passung erreicht werden.

Dabei ist es von Vorteil, wenn das Gehäuse im Bereich der Nut mindestens eine Durchbrechung aufweist. Auf diese Weise ist die Nut von außen zugänglich, wodurch die Dichtmasse zur Ausbildung der Dichtung leicht eingespritzt werden kann. Somit ergibt sich eine einfache Montage der Dichtung von außen. Um die gewünschte Form der Dichtung zu erreichen, kann entweder der zugehörige Stecker oder ein Gegenstück als Formgebungselement in das Aufnahmeteil eingesetzt werden.

Vorzugsweise besteht die Dichtung aus einem elastischen Material, insbesondere aus Silikon oder aus einem Elastomer. Insbesondere eine aus Silikon bestehende Dichtung zeichnet sich durch eine hohe Temperaturbeständigkeit von bis zu ca. 250° C aus.

Um ein praxisgerechtes Einstecken zu ermöglichen, weist der Vorderabschnitt des Aufnahmeteils einen Anschlag für den Stecker auf. Dadurch wird sichergestellt, dass der Benutzer erkennt, wann sich der Stecker in seiner Endposition befindet. Der Anschlag kann mit einer mit dem Stecker zusammenwirkenden Ausnehmung versehen sein, so dass eine verdrehsichere Lage des Steckers in dem Aufnahmeteil erreicht wird.

Insbesondere im Hinblick auf den bevorzugten Einsatz des Aufnahmeteils zur Verbindung zweier Schläuche ist es zweckmäßig, dass das Gehäuse im Bereich des Vorderabschnittes eine äußere Mantelfläche aufweist, an der ein Schlauch festlegbar ist.

Um den Schlauch durch Aufschieben an dem Aufnahmeteil festzulegen, ist es von Vorteil, wenn die äußere Mantelfläche mindestens eine eingeformte Rippe aufweist. Bei Ausbildung mehrerer Rippen können diese auch unterschiedliche Konturen haben. Für den Fall, dass der Schlauch aufgeschraubt oder das Aufnahmeteil in ein Gehäuse eingeschraubt werden soll, kann die äußere Mantelfläche mit einem Gewinde versehen sein.

In einer weiteren bevorzugten Ausführungsform erstreckt sich der Endbereich des Steckers im eingeführten Zustand des Steckers vollständig im Bereich des Endabschnittes des Gehäuses. Mit dieser zusätzlichen Ausgestaltung kann die Baulänge des Endabschnittes des Aufnahmeteils und des Endbereiches des Steckers im Vergleich zu herkömmlichen Steckverbindungen weiter reduziert werden. Im Zusammenspiel mit der Ausbildung des Vorderabschnittes des Aufnahmeteils und des Vorderbereiches des Steckers ist für einen zuverlässigen Halt der Steckverbindung gesorgt.

Von Vorteil ist es ferner, wenn das Gehäuse im Bereich des Endabschnittes wenigstens einen Schlitz zur Aufnahme des Befestigungsmittels aufweist. So kann das Befestigungsmittel im eingeführten Zustand von außen in die Verriegelungsstellung gebracht werden. Ferner kann das Befestigungsmittel mit Hilfe des Schlitzes unverlierbar am Aufnahmeteil gehalten werden.

Vorzugsweise weisen der Vorderabschnitt und der Endabschnitt eine kreiszylindrische Form auf. Diese Ausgestaltung erleichtert den Einsteckvorgang und hält den regelmäßig kreiszylindrischen Querschnitt der zu verbindenden Leitungen aufrecht, wodurch auch das Strömungsverhalten der durch die Leitung strömenden Flüssigkeit oder Luft am wenigsten beeinflusst wird. Allerdings ist alternativ auch eine polygonförmige Ausgestaltung möglich.

Im Hinblick auf eine praxisgerechte Herstellung des Aufnahmeteils ist es zweckmäßig, dass das Gehäuse als Spritzgussteil aus einem thermoplastischen Kunststoff hergestellt ist. Vorzugsweise wird das Gehäuse dabei aus Polyamid gefertigt. Alternativ kann es auch aus Metall geformt werden.

Schließlich kann das Aufnahmeteil zur Aufnahme zweier Stecker ausgebildet sein, wobei sich insbesondere eine symmetrische Ausbildung anbietet.

Nachfolgend wird die Erfindung unter Bezugnahme auf die Zeichnungen weiter erläutert. Dabei zeigen schematisch:
- Fig. 1: eine Seitenansicht eines erfindungsgemäßen Aufnahmeteils;
- Fig. 2: einen Längsschnitt durch das Aufnahmeteil gemäß Fig. 1;
- Fig. 3: eine Seitenansicht eines Steckers;
- Fig. 4: einen Längsschnitt durch den Stecker gemäß Fig. 3;
- Fig. 5: einen Längsschnitt einer zusammengebauten Steckverbindung mit dem Aufnahmeteil gemäß Fig.1 und dem Stecker gemäß Fig. 3;
- Fig. 6a: eine Seitenansicht eines Befestigungsmittels zur Fixierung der Steckverbindung gemäß Fig. 5, und
- Fig. 6b: eine weitere Seitenansicht des Befestigungsmittels gemäß Fig. 6a in Richtung des Pfeils VIb in Fig. 6a.

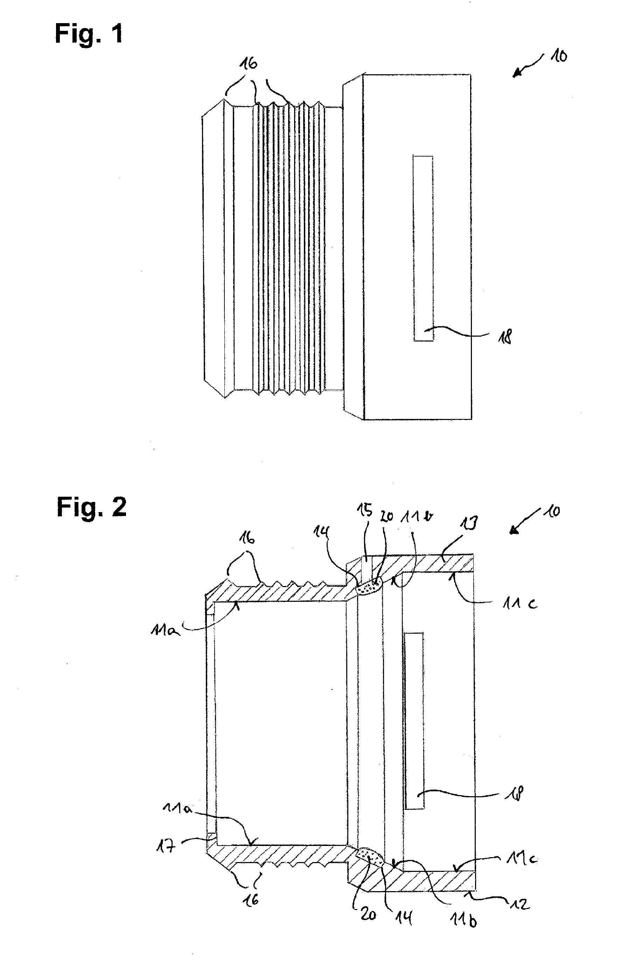

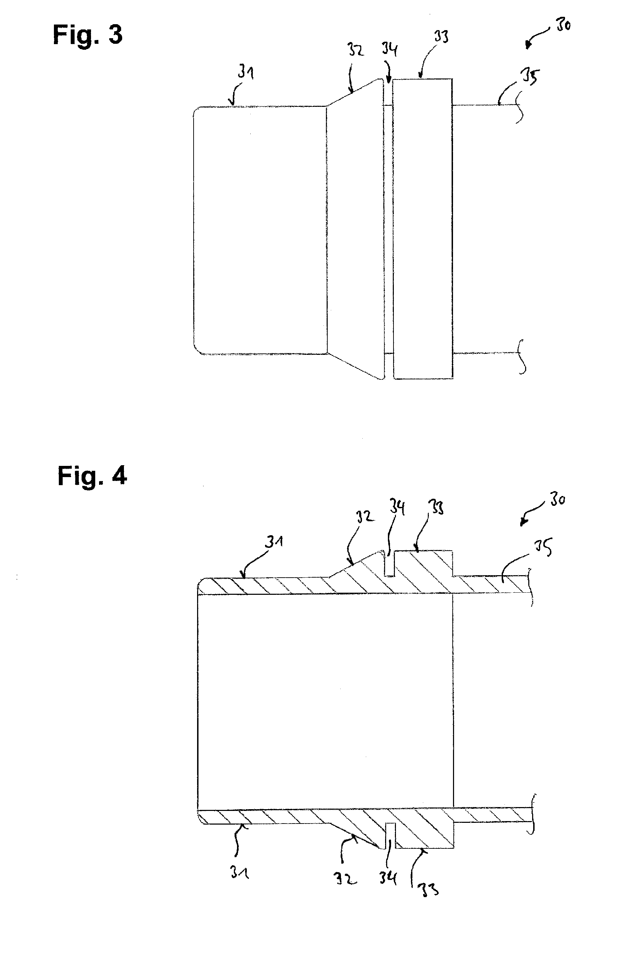

Die Fig. 1 und 2 zeigen eine Ausführungsform eines erfindungsgemäßen Aufnahmeteils 10. Das Aufnahmeteil 10 dient zur Aufnahme eines in den Figuren 3 und 4 dargestellten Steckers 30, der als Ladeluft-Stecker bei einem Verbrennungsmotor eingesetzt wird. Das Aufnahmeteil 10 weist ein hohlzylinderförmiges Gehäuse 13 mit einer inneren Mantelfläche 11 und einer äußeren Mantelfläche 12 auf. Zur Festlegung eines in der Zeichnung nicht dargestellten Schlauches weist das Aufnahmeteil 10 mehrere in die äußere Mantelfläche 12 des Gehäuses 13 eingeformte Rippen 16 auf. Das Aufnahmeteil 10 besteht aus Polyamid oder einem anderen geeigneten Material.

Wie Fig. 2 zu entnehmen ist, ist die innere Mantelfläche 11 des Aufnahmeteils 10 in einen zylindrischen Vorderabschnitt 11a, einen konischen Übergangsabschnitt 11b und einen zylinderförmigen Endabschnitt 11c unterteilt und bildet eine Einstecköffnung für den Stecker 30. Dabei ist der Durchmesser des zylinderförmigen Endabschnittes 11c größer als der Durchmesser des zylindrischen Vorderabschnittes 11a. Anders ausgedrückt, steigt der Öffnungsquerschnitt vom Vorderabschnitt 11a in Richtung zum Endabschnitt 11c an. Im Bereich des konischen Übergangsabschnittes 11b ist eine als umlaufende Ringnut ausgebildete Nut 14 vorgesehen. In die Nut 14 ist eine Dichtung 20 aus Silikon eingespritzt, wobei die Dichtung 20 über die innere Mantelfläche 11 hervorsteht. Um das Einspritzen des Silikonmaterials in die Nut 14 von außen zu ermöglichen, sind in dem Gehäuse 13 mehrere über den Umfang verteilte Durchbrechungen 15 eingebracht. Diese Durchbrechungen 15 verlaufen schräg zum Übergangsabschnitt 11b, können aber auch eine andere Ausrichtung haben.

Im Bereich des Vorderabschnittes 11a weist das Aufnahmeteil 10 einen umlaufenden Anschlag 17 auf. Der Anschlag 17 hilft dem Benutzer beim Einsteckvorgang zu erkennen, wann die ordnungsgemäße Endposition des Steckers 30 in dem Aufnahmeteil 10 erreicht ist.

Wie insbesondere aus Fig. 4 hervorgeht, weist der aus Metall hergestellte Stecker 30 eine äußere Mantelfläche auf, welche sich in einen zylindrischen Vorderbereich 31, einen konischen Übergangsbereich 32 und einen zylindrischen Endbereich 33 unterteilt. In analoger Weise zu der Ausgestaltung des Aufnahmeteils 10 steigt der Außendurchmesser der äußeren Mantelfläche des Steckers 30 vom Vorderbereich 31 in Richtung zum Endbereich 33 an.

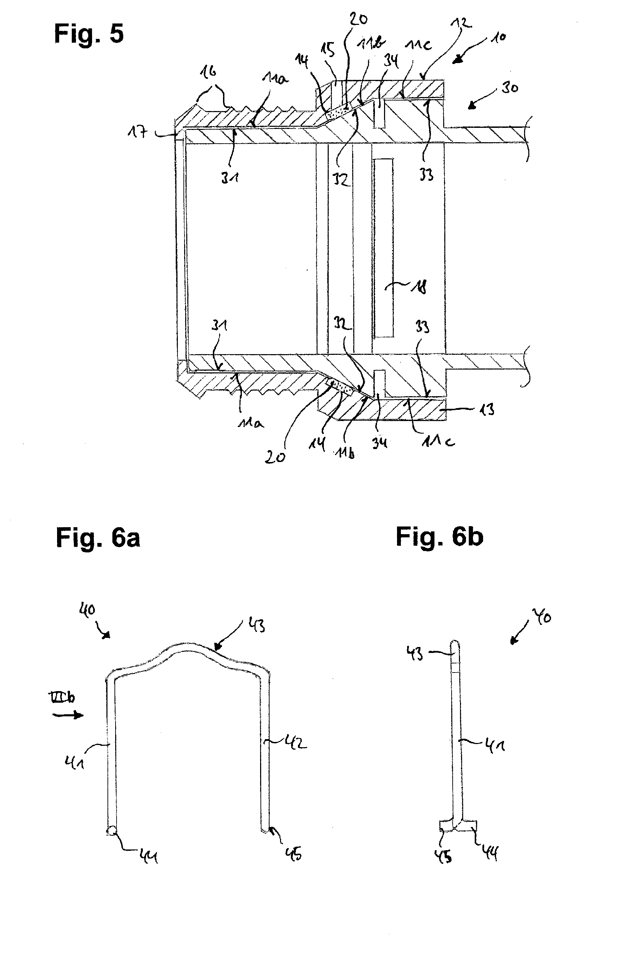

Fig. 5 zeigt die Position des Steckers 30 in dem Aufnahmeteil 10 im eingeführten Zustand. Dabei ist zu erkennen, dass der Durchmesser des Abschnittes 11a und der Durchmesser des Bereiches 31 nahezu gleich groß sind. Gleiches gilt für die Durchmesser des Abschnittes 11c und des Bereiches 33. Auch die in die Horizontale projizierten Längen des Übergangsabschnittes 11b und des Übergangsbereiches 32 stimmen nahezu überein. Weiterhin ist die Länge des Vorderabschnittes 11a unter Berücksichtigung des Anschlages 17 so auf die Länge des Vorderbereiches 31 abgestimmt, dass sich der Vorderbereich 31 im eingeführten Zustand mit seiner gesamten Länge an dem Vorderabschnitt 11a abstützt. Des Weiteren stimmt die Länge des Endabschnittes 11c mit der Länge des Endbereiches 33 überein. Der Endabschnitt 11c und der Endbereich 33 schließen außenseitig bündig miteinander ab. So wird eine passgenaue Aufnahme des Steckers 30 in dem Aufnahmeteil 10 geschaffen.

Um den Stecker 30 in seiner eingesteckten Position am Aufnahmeteil 10 zu fixieren und eine gegenseitige Axialverschiebung von Aufnahmeteil 10 und Stecker 30 zu verhindern, ist ein Befestigungselement 40 in Form eines verformbaren Metallbügels vorgesehen. Wie aus den Figuren 6a und 6b zu erkennen, weist das etwa U-förmig ausgebildete Befestigungselement 40 einen Schenkel 41 und einen Schenkel 42 auf. Diese Schenkel 41, 42 sind über einen Verbindungssteg 43 miteinander verbunden. An den freien Enden der Schenkel 41, 42 schließt jeweils im rechten Winkel ein abgewinkeltes Ende 44 beziehungsweise 45 an. Dabei sind die Enden 44, 45 in entgegengesetzte Richtungen von den Schenkeln 41, 42 weg gerichtet. Die Enden 44, 45 erfüllen zum einen den Zweck, dass das Befestigungselement 40 unverlierbar an dem Aufnahmeteil 10 angeordnet ist. Andererseits können die abgewinkelten Enden 44, 45 im Verriegelungszustand in Ausnehmungen eingreifen, die in der äußeren Mantelfläche 12 des Aufnahmeteils 10 eingeformt sind. So wird für einen sicheren Halt des Befestigungselementes 40 gesorgt.

Um nun die Fixierung des Steckers 30 in dem Aufnahmeteil 10 mittels des Befestigungselementes 40 zu ermöglichen, weist das Aufnahmeteil 10 im Bereich des Endabschnittes 11c zwei diametral gegenüberliegende Schlitze 18 auf. Diesen Schlitzen 18 ist ein im Endbereich 33 des Steckers 30 angeordneter, umlaufender Einschnitt 34 zugeordnet. Mit anderen Worten, ist die Lage der Schlitze 18 und des Einschnittes 34 so aufeinander abgestimmt, dass im eingeführten Zustand das Befestigungselement 40 durch die Schlitze 18 in den Einschnitt 34 eingreifen kann. Um dies zu erreichen, sind die Schenkel 41, 42 des Befestigungselementes 40 in den Schlitzen 18 verschiebbar geführt. Vor dem Einführen des Steckers 30 in das Aufnahmeteil 10 wird das Befestigungselement 40 soweit wie möglich nach oben gezogen. Dabei dienen die abgewinkelten Enden 44, 45 als Anschläge und verhindern, dass das Befestigungselement 40 vollständig aus dem Aufnahmeteil 10 herausgezogen wird. Nach Einstecken des Steckers 30 in das Aufnahmeteil 10 wird der Verriegelungszustand dadurch erreicht, dass das Befestigungselement 40 nach unten gedrückt wird bis die Schenkel 41, 42 in den Einschnitt 34 eingreifen. In diesem Zustand liegt der Verbindungssteg 43 mit seinen äußeren Bereichen auf der äußeren Mantelfläche 12 auf. Um die Verriegelung zu lösen, weist der Verbindungssteg 43 in der Mitte einen Abschnitt auf, der zur Entriegelung des Befestigungselementes 40 mit einem Werkzeug hintergreifbar ist.

Das in dem Ausführungsbeispiel gezeigte Aufnahmeteil 10 zeichnet sich insbesondere durch die Ausgestaltung der inneren Mantelfläche 11 aus, die eine vollständige Aufnahme des Vorderbereiches 31 sowie des Endbereiches 33 des Steckers 30 ermöglicht. Grund hierfür ist insbesondere die Konfiguration des Vorderabschnittes 11a, welcher zugleich zur Festlegung eines Schlauches dient. Aufgrund dieser Gestaltung wird eine kurze Baulänge des Aufnahmeteils 10 und somit der Steckverbindung erzielt. In Kombination mit der Anordnung der Dichtung 20 in dem konischen Übergangsabschnitt 11b sind nur geringe Fügekräfte zum Einführen des Steckers 30 in das Aufnahmeteil 10 erforderlich. Ein weiterer Vorteil besteht in der Ausführung der Dichtung 20 als eingespritzte Dichtung. Dies erfordert keine separate Herstellung der Dichtung 20. Darüber hinaus ist die Dichtung 20 leicht auswechselbar.

### Bezugszeichenliste

- 10: Aufnahmeteil
- 11: innere Mantelfläche
- 11a: Vorderabschnitt
- 11 b: Übergangsabschnitt
- 11c: Endabschnitt
- 12: äußere Mantelfläche
- 13: Gehäuse
- 14: Nut
- 15: Durchbrechung
- 16: Rippen
- 17: Anschlag
- 18: Schlitz

- 20: Dichtung

- 30: Stecker
- 31: Vorderbereich
- 32: Übergangsbereich
- 33: Endbereich
- 34: Einschnitt
- 35: Anschlussabschnitt

- 40: Befestigungselement
- 41: Schenkel
- 42: Schenkel

- 43: Verbindungssteg
- 44: abgewinkeltes Ende
- 45: abgewinkeltes Ende

## Patentansprüche

1. Aufnahmeteil (10) für einen Stecker (30), insbesondere einen Ladeluft-Stecker eines Verbrennungsmotors, wobei der Stecker (30) einen Vorderbereich (31), einen konischen Übergangsbereich (32) und einen Endbereich (33) aufweist, wobei der Durchmesser vom Vorderbereich (31) in Richtung zum Endbereich (33) ansteigt, wobei das Aufnahmeteil (10) ein hohlzylinderförmiges Gehäuse (13) mit einer inneren Mantelfläche (11) aufweist, die in einen Vorderabschnitt (11a), einen konischen Übergangsabschnitt (11b) und einen Endabschnitt (11c) unterteilt ist, wobei der Öffnungsquerschnitt vom Vorderabschnitt (11a) in Richtung zum Endabschnitt (11c) ansteigt, wobei am Gehäuse (13) ein Befestigungselement (40) angeordnet ist, das den Stecker (30) im eingeführten Zustand lösbar festlegt, und wobei am Gehäuse (13) eine Dichtung (20) im Bereich des konischen Übergangsabschnittes (11b) des Gehäuses (13) angeordnet ist und mit dem konischen Übergangsbereich (32) des Steckers (30) im eingeführten Zustand zusammenwirkt, **dadurch gekennzeichnet, dass** der Öffnungsquerschnitt des Gehäuses (13) derart dimensioniert ist, dass der Vorderbereich (31) des Steckers (30) im eingeführten Zustand vollständig im Vorderabschnitt (11a) aufgenommen ist und an diesem anliegt.

2. Aufnahmeteil (10) nach Anspruch 1, **dadurch gekennzeichnet, dass** die Dichtung (20) an den konischen Übergangsabschnitt (11b) der Mantelfläche (11) angespritzt ist.

3. Aufnahmeteil (10) nach Anspruch 2, **dadurch gekennzeichnet, dass** der konische Übergangsabschnitt (11b) eine eingeformte Nut (14) aufweist, in welche die Dichtung (20) eingespritzt ist.

4. Aufnahmeteil (10) nach Anspruch 3, **dadurch gekennzeichnet, dass** das Gehäuse (13) im Bereich der Nut (14) mindestens eine Durchbrechung (15) aufweist.

5. Aufnahmeteil (10) nach einem der Ansprüche 1 bis 4, **dadurch gekennzeichnet, dass** die Dichtung (20) aus einem elastischen Material, insbesondere aus Silikon oder aus einem Elastomer, besteht.

6. Aufnahmeteil (10) nach einem der Ansprüche 1 bis 5, **dadurch gekennzeichnet, dass** der Vorderabschnitt (11a) einen Anschlag (17) für den Stecker (30) aufweist.

7. Aufnahmeteil (10) nach einem der Ansprüche 1 bis 6, **dadurch gekennzeichnet, dass** das Gehäuse (13) im Bereich des Vorderabschnittes (11a) eine äußere Mantelfläche (12) aufweist, an der ein Schlauch festlegbar ist.

8. Aufnahmeteil (10) nach Anspruch 7, **dadurch gekennzeichnet, dass** die Mantelfläche (12) mindestens eine eingeformte Rippe (16) oder ein Gewinde aufweist.

9. Aufnahmeteil (10) nach einem der vorhergehenden Ansprüche, **dadurch gekennzeichnet, dass** sich der Endbereich (33) des Steckers (30) im eingeführten Zustand des Steckers (30) vollständig im Bereich des Endabschnittes (11c) des Gehäuses (13) erstreckt.

10. Aufnahmeteil (10) nach einem der vorhergehenden Ansprüche, **dadurch gekennzeichnet, dass** das Gehäuse (13) im Bereich des Endabschnittes (11c) wenigstens einen Schlitz (18) zur Aufnahme des Befestigungsmittels (40) aufweist.

11. Aufnahmeteil (10) nach einem der vorhergehenden Ansprüche, **dadurch gekennzeichnet, dass** der Vorderabschnitt (11a) und der Endabschnitt (11 b) eine kreiszylindrische Form aufweisen.

12. Aufnahmeteil (10) nach einem der vorhergehenden Ansprüche, **dadurch gekennzeichnet, dass** das Gehäuse (13) als Spritzgussteil aus einem thermoplastischen Kunststoff hergestellt ist.
